# FASCICULE DE BREVET EUROPEEN

(11) **EP 3 529 632 B1**
(45) Date de publication et mention de la délivrance du brevet: **02.12.2020**
(21) Numéro de dépôt: 17787195.1
(22) Date de dépôt: 24.10.2017
(51) Int. Cl.: G01S 13/56, G01S 13/86, G01S 13/88, G08B 13/19, G08B 13/24, G08B 29/18

(54) **DISPOSITIF ET PROCEDE DE DETECTION DU PASSAGE D'UN INDIVIDU**
VORRICHTUNG UND VERFAHREN ZUR DETEKTION DES DURCHGANGS EINES INDIVIDUUMS
DEVICE AND METHOD FOR DETECTING THE PASSAGE OF AN INDIVIDUAL

(30) Priorité: 24.10.2016 FR 1660287
(43) Date de publication de la demande: 28.08.2019
(73) Titulaire: Delta Dore, 35270 Bonnemain (FR)
(72) Inventeur: LEGROS, Guillaume, 35270 Bonnemain (FR); POUJAUD, Laurent, 35270 Bonnemain (FR); EVEN, Nicolas, 35270 Bonnemain (FR)
(74) Mandataire: Cabinet Le Guen Maillet
(86) Numéro de dépôt international: PCT/EP2017/077110
(87) Numéro de publication internationale: WO 2018/077846

(56) Documents cités:
- EP-A1- 1 508 818
- US-A1- 2010 328 068
- US-A1- 2013 002 434

## Description

La présente invention concerne un procédé et un dispositif de détection du passage d'un individu.

La détection de mouvement par infrarouge est classiquement utilisée. Des détecteurs infrarouge sont placés à l'intérieur ou à l'extérieur d'un bâtiment.

Il existe différents types de détecteurs infrarouge, leur zone de détection variant en fonction de leur type.

Par exemple, les détecteurs infrarouge de type " rideau " ont une zone de détection très fine, comme un rideau, et leur angle d'ouverture peut être de quelques degrés. Un détecteur rideau doit détecter le passage d'un intrus par une porte, une baie vitrée ou une fenêtre.

Les détecteurs infrarouge de longue portée sont utilisés pour la surveillance des couloirs ou corridors. Leur portée de détection peut aller jusqu'à des distances de soixante mètres.

Les détecteurs infrarouge de type grand angle, par exemple entre quatre-vingt dix et cent vingt degrés, sont couramment utilisés pour la surveillance de pièces.

Les sources de chaleur telles que le rayonnement solaire peuvent créer des variations de rayonnement infrarouge et provoquer ainsi des fausses détections.

Les courants d'air peuvent également engendrer des détections intempestives.

Afin d'éviter de telles détections intempestives, il a été envisagé de coupler à la détection infrarouge une détection de type radar ou hyperfréquence. Cette technologie n'étant pas sensible aux variations environnementales, elle constitue un bon complément à la détection infrarouge.

La détection utilisant les ondes hyperfréquence est consommatrice en énergie électrique et pénalise la durée de fonctionnement du détecteur si celui-ci est alimenté par pile ou batterie.

Des dispositifs de détection du passage d'un individu sont par exemple connus des brevets US2013002434 et US2010328068.

La présente invention a pour but de résoudre les inconvénients de l'art antérieur en proposant un procédé et un dispositif de détection sur batterie qui possède une durée de fonctionnement importante et qui apporte une plus grande fiabilité dans la détection.

A cette fin, selon un premier aspect, l'invention propose un dispositif de détection du passage d'un individu comportant un détecteur infrarouge, un radar relié à une interface hyperfréquence, l'interface hyperfréquence comportant au moins un filtre passe haut, le au moins un filtre passe haut ayant une constante de temps pour filtrer un signal délivré par le radar, caractérisé en ce que le dispositif comporte :
- des moyens d'activation d'une alimentation électrique de l'interface hyperfréquence lorsque le passage d'un individu est détecté par le détecteur infrarouge,
- des moyens de réduction de la constante de temps du au moins un filtre pendant une première durée prédéterminée,
- des moyens de modification de la constante de temps réduite pour obtenir la constante de temps pour filtrer le signal délivré par le radar quand la première durée prédéterminée est écoulée,
- des moyens de confirmation du passage d'un individu par l'interface hyperfréquence,
- des moyens de désactivation de l'alimentation électrique de l'interface hyperfréquence après la confirmation de détection du passage d'un individu par l'interface hyperfréquence et/ou après la fin d'une temporisation activée lors de l'activation de l'alimentation électrique de l'interface hyperfréquence.

L'invention concerne aussi un procédé de détection du passage d'un individu comportant un détecteur infrarouge, un radar relié à une interface hyperfréquence, l'interface hyperfréquence comportant au moins un filtre passe haut, le au moins un filtre passe haut ayant une constante de temps pour filtrer un signal délivré par le radar, caractérisé en ce que le procédé comporte les étapes de :
- activation d'une alimentation électrique de l'interface hyperfréquence lorsque le passage d'un individu est détecté par le détecteur infrarouge,
- réduction de la constante de temps du au moins un filtre pendant une première durée prédéterminée,
- modification de la constante de temps réduite pour obtenir la constante de temps pour filtrer le signal délivré par le radar quand la première durée prédéterminée est écoulée,
- confirmation du passage d'un individu par l'interface hyperfréquence,
- désactivation de l'alimentation électrique de l'interface hyperfréquence après la confirmation de détection du passage d'un individu par l'interface hyperfréquence et/ou après la fin d'une temporisation activée lors de l'activation de l'alimentation électrique de l'interface hyperfréquence.

Ainsi, il est possible de réduire sensiblement la consommation du produit en activant l'interface hyperfréquence uniquement lorsqu'une détection a été réalisée par le détecteur infrarouge. Le détecteur de passage d'un individu peut ainsi être alimenté par une batterie telle qu'une pile et avoir une autonomie importante. De par la rapidité de la mise dans un état opérationnel de l'interface hyperfréquence, même lorsqu'un individu passe très rapidement devant le détecteur, celui-ci est détecté.

Selon un mode particulier de l'invention, les moyens de réduction de la constante de temps du au moins un filtre pendant la première durée prédéterminée se composent d'un interrupteur et d'une première résistance, la résistance étant mise en parallèle lorsque l'interrupteur est fermé avec une seconde résistance du filtre passe haut.

Ainsi, il est possible de réduire sensiblement le temps de stabilisation du signal de sortie de l'interface hyperfréquence lors de la première durée prédéterminée et de revenir sur un filtrage avec les constantes de temps souhaitées après que ce temps se soit écoulé.

Selon un mode particulier de l'invention, les moyens de confirmation du passage d'un individu par l'interface hyperfréquence se composent :
- de moyens de vérification, après un délai prédéterminé, si le signal délivré par l'interface hyperfréquence est supérieur à un seuil prédéterminé pendant une seconde durée prédéterminée,
- de moyens de décision de la confirmation du passage d'un individu si le signal délivré par l'interface hyperfréquence est supérieur au seuil prédéterminé pendant la seconde durée prédéterminée.

Ainsi, l'interface hyperfréquence n'est alimentée que le temps minimum nécessaire pour confirmer ou non la détection du passage d'un individu par le détecteur infrarouge.

Selon un mode particulier de l'invention, l'interface hyperfréquence comporte trois filtres passe haut et la constante de temps de chaque filtre passe haut est réduite pendant la première durée prédéterminée.

Ainsi, il est possible de réduire sensiblement le temps de stabilisation du signal de sortie de l'interface hyperfréquence à sa mise sous tension.

Selon un mode particulier de l'invention, la première durée prédéterminée est comprise entre 1 milliseconde et 200 millisecondes, la temporisation activée lors de l'activation de l'alimentation électrique de l'interface hyperfréquence est comprise entre 100 millisecondes et 1 seconde, le délai prédéterminé est compris entre 1 milliseconde et 200 millisecondes et la seconde durée prédéterminée est comprise entre 1 milliseconde et 200 millisecondes.

Selon un mode particulier de l'invention, la première durée prédéterminée est égale à 20 millisecondes, la temporisation activée lors de l'activation de l'alimentation électrique de l'interface hyperfréquence est égale à une seconde, le délai prédéterminé est égal à 60 millisecondes et la seconde durée prédéterminée est égale à 80 millisecondes.

Ainsi, le produit est suffisamment réactif pour permettre la détection du passage d'un individu.

Selon un mode particulier de l'invention, le dispositif de détection du passage d'un individu comporte en outre des moyens de génération et de transfert d'un message à une centrale d'alarme, le message étant représentatif de la détection et de la confirmation du passage d'un individu.

Ainsi, la centrale n'est prévenue qu'en cas de détection confirmée.

Selon un mode particulier de l'invention, le dispositif de détection du passage d'un individu est un détecteur rideau.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une ouverture d'un bâtiment équipée d'un dispositif de détection du passage d'un individu selon la présente invention ;
la Fig. 2 représente un exemple d'architecture d'un dispositif de détection du passage d'un individu selon la présente invention ;
la Fig. 3 représente un exemple de schéma électrique d'une interface hyperfréquence d'un dispositif de détection du passage d'un individu selon la présente invention ;
la Fig. 4 représente un algorithme de détection du passage d'un individu selon la présente invention.

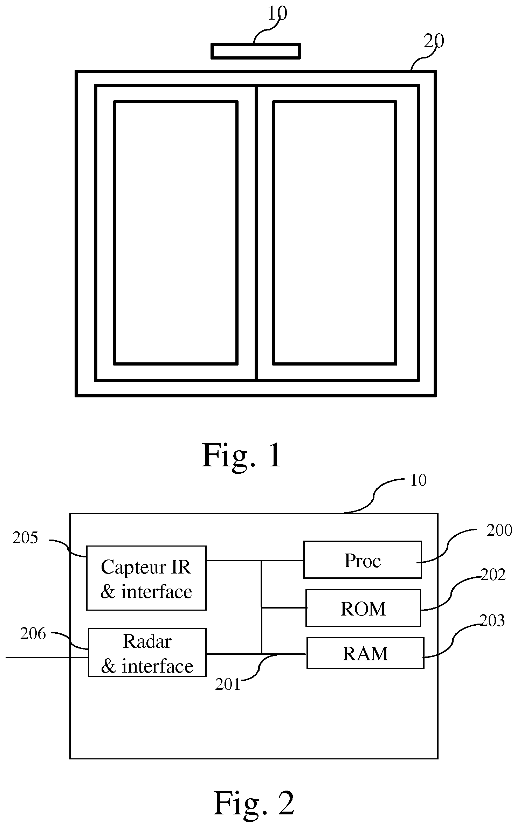

La **Fig. 1** représente une ouverture d'un bâtiment équipée d'un dispositif de détection du passage d'un individu selon la présente invention.

Un dispositif de détection du passage d'un individu 10 est placé par exemple horizontalement au-dessus d'une ouverture 20.

Le dispositif de détection du passage d'un individu 10 est par exemple un détecteur de type rideau.

En variante, le dispositif de détection du passage d'un individu 10 est placé à la verticale de l'ouverture 20.

Selon la présente invention, le dispositif de détection du passage d'un individu comporte un détecteur infrarouge, un radar relié à une interface hyperfréquence, l'interface hyperfréquence comporte au moins un filtre passe haut, le au moins un filtre passe haut a une constante de temps pour filtrer un signal délivré par le radar et le dispositif comporte :
- des moyens d'activation d'une alimentation électrique de l'interface hyperfréquence lorsque le passage d'un individu est détecté par le détecteur infrarouge,
- des moyens de réduction de la constante de temps du au moins un filtre pendant une première durée prédéterminée,
- des moyens de modification de la constante de temps réduite pour obtenir la constante de temps pour filtrer le signal délivré par le radar quand la première durée prédéterminée est écoulée,
- des moyens de confirmation du passage d'un individu par l'interface hyperfréquence,
- des moyens de désactivation de l'alimentation électrique de l'interface hyperfréquence après la confirmation de détection du passage d'un individu par l'interface hyperfréquence et/ou après la fin d'une temporisation activée lors de l'activation de l'alimentation électrique de l'interface hyperfréquence.

La **Fig. 2** représente un exemple d'architecture d'un dispositif de détection du passage d'un individu selon la présente invention.

Le dispositif de détection du passage d'un individu 10 comprend :
- un processeur, micro-processeur, ou microcontrôleur 200 ;
- une mémoire volatile 203 ;
- une mémoire non volatile 202 ;
- un capteur infrarouge associé à une interface 205 ;
- un module radio et une interface hyperfréquence 206 associée au module radio ;
- un bus de communication reliant le processeur 200 à la mémoire ROM 203, à la mémoire RAM 203, l'interface 205 et l'interface 206.

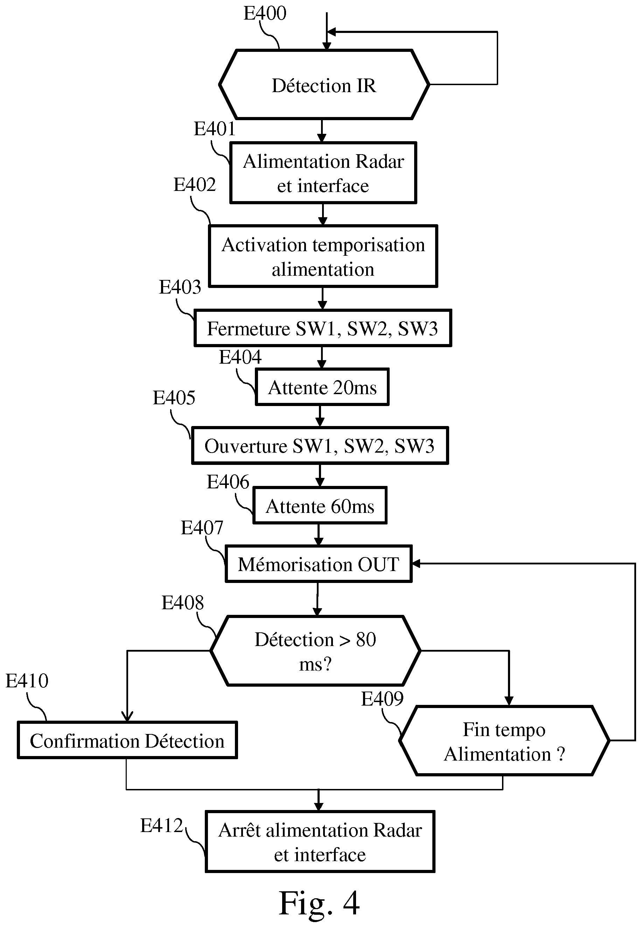

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif de détection du passage d'un individu 10 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 4.

Tout ou partie du procédé décrit en relation avec la Fig. 4 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur, ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

Le capteur infrarouge et l'interface 205 délivrent un signal analogique ou logique représentatif d'une détection ou non du passage d'un individu.

Le radar et l'interface hyperfréquence 20 délivrent un signal analogique ou logique représentatif d'une détection ou non du passage d'un individu.

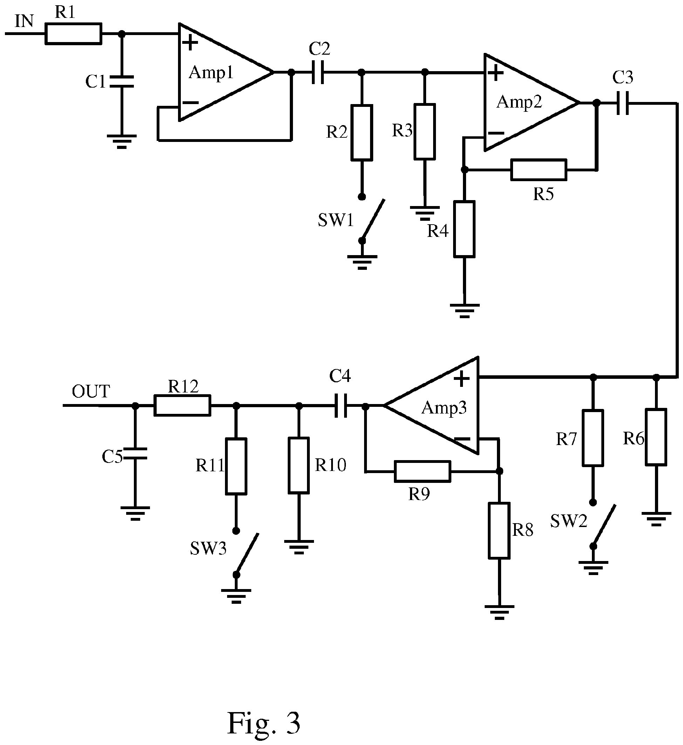

La **Fig. 3** représente un exemple de schéma électrique d'une interface hyperfréquence d'un dispositif de détection du passage d'un individu selon la présente invention.

Le radar est relié à l'entrée IN de l'interface 206. L'entrée IN est reliée à une première terminaison d'une résistance R1. Une seconde terminaison de la résistance R1 est reliée à l'entrée + d'un amplificateur Amp1 et à une première terminaison d'un condensateur C1.

Une seconde terminaison du condensateur C1 est reliée à la masse du dispositif de détection du passage d'un individu 10.

La résistance R1 et le condensateur C1 forment un filtre passe bas dont la fréquence de coupure est par exemple égale à 2,3 MHz.

L'entrée - de l'amplificateur Amp1 est reliée à la sortie de l'amplificateur Amp1 et à une première terminaison d'un condensateur C2.

L'amplificateur Amp1 est un amplificateur suiveur.

Une seconde terminaison du condensateur C2 est reliée à une première terminaison d'une résistance R2 et à une première terminaison d'une résistance R3.

Une seconde terminaison de la résistance R2 est reliée à une première terminaison d'un interrupteur SW1. Une seconde terminaison de l'interrupteur SW1 est reliée à la masse du dispositif de détection du passage d'un individu 10.

Une seconde terminaison de la résistance R3 est reliée à la masse du dispositif de détection du passage d'un individu 10.

Le condensateur C2, la résistance R3 forment un premier filtre passe haut dont la fréquence de coupure est par exemple de l'ordre de 4Hz. Cette fréquence de coupure est la fréquence de coupure dans un mode de détection de la présence d'un individu de l'interface 206.

Le condensateur C2, les résistances R2 et R3 forment un filtrent passe haut dont la fréquence de coupure est par exemple de l'ordre de 17Hz. Cette fréquence de coupure est la fréquence de coupure dans un mode de mise sous tension accélérée de l'interface 206. En fermant l'interrupteur SW1, les résistances R2 et R3 sont en parallèle et la constante de temps du filtre passe bas est réduite, réduisant ainsi le délai de mise en opération de l'interface 206 après une mise sous tension de celle-ci.

La première terminaison de la résistance R3 est reliée à l'entrée + d'un amplificateur Amp2.

L'entrée - de l'amplificateur Amp2 est reliée à une première terminaison d'une résistance R4 et à une première terminaison d'une résistance R5.

Une seconde terminaison de la résistance R4 est reliée à la masse du dispositif de détection du passage d'un individu 10.

Une seconde terminaison de la résistance R5 est reliée à la sortie de l'amplificateur Amp2 et à une première terminaison d'un condensateur C3.

L'amplificateur Amp2, les résistances R4 et R5 amplifient le signal, par exemple d'un gain de l'ordre de 10.

Une seconde terminaison du condensateur C3 est reliée à une première terminaison d'une résistance R6 et à une première terminaison d'une résistance R7.

Une seconde terminaison de la résistance R7 est reliée à une première terminaison d'un interrupteur SW2. Une seconde terminaison de l'interrupteur SW2 est reliée à la masse du dispositif de détection du passage d'un individu 10.

Une seconde terminaison de la résistance R6 est reliée à la masse du dispositif de détection du passage d'un individu 10.

Le condensateur C3, la résistance R6 forment un second filtre passe haut dont la fréquence de coupure est par exemple de l'ordre de 4Hz. Cette fréquence de coupure est la fréquence de coupure dans un mode de détection de la présence d'un individu de l'interface 206.

Le condensateur C3, les résistances R6 et R7 forment un filtrent passe haut dont la fréquence de coupure est par exemple de l'ordre de 17Hz. Cette fréquence de coupure est la fréquence de coupure dans un mode de mise sous tension accélérée de l'interface 206. En fermant l'interrupteur SW2, les résistances R6 et R7 sont en parallèle et la constante de temps du filtre passe bas est réduite, réduisant ainsi le délai de mise en opération de l'interface 206 après une mise sous tension de celle-ci.

La première terminaison de la résistance R7 est reliée à l'entrée + d'un amplificateur Amp3.

L'entrée - de l'amplificateur Amp3 est reliée à une première terminaison d'une résistance R8 et à une première terminaison d'une résistance R9.

Une seconde terminaison de la résistance R8 est reliée à la masse du dispositif de détection du passage d'un individu 10.

Une seconde terminaison de la résistance R9 est reliée à la sortie de l'amplificateur Amp3 et à une première terminaison d'un condensateur C4.

L'amplificateur Amp3, les résistances R8 et R9 amplifient le signal, par exemple d'un gain de l'ordre de 10.

Il est à remarquer ici que le gain de la chaine d'amplification peut être adapté lors de l'installation du dispositif de détection du passage d'un individu 10.

Par exemple, les valeurs des résistances R4 et R8 peuvent être modifiées pour obtenir des gains respectifs de l'ordre de 40 et 70.

Une seconde terminaison du condensateur C4 est reliée à une première terminaison d'une résistance R10 et à une première terminaison d'une résistance R11.

Une seconde terminaison de la résistance R11 est reliée à une première terminaison d'un interrupteur SW3. Une seconde terminaison de l'interrupteur SW3 est reliée à la masse du dispositif de détection du passage d'un individu 10.

Une seconde terminaison de la résistance R10 est reliée à la masse du dispositif de détection du passage d'un individu 10.

Le condensateur C4, la résistance R10 forment un troisième filtre passe haut dont la fréquence de coupure est par exemple de l'ordre de 4Hz. Cette fréquence de coupure est la fréquence de coupure dans un mode de détection de la présence d'un individu de l'interface 206.

Le condensateur C4, les résistances R10 et R11 forment un filtrent passe haut dont la fréquence de coupure est par exemple de l'ordre de 17Hz. Cette fréquence de coupure est la fréquence de coupure dans un mode de mise sous tension accélérée de l'interface 206. En fermant l'interrupteur SW3, les résistances R10 et R11 sont en parallèle et la constante de temps du filtre passe bas est réduite, réduisant ainsi le délai de mise en opération de l'interface 206 après une mise sous tension de celle-ci.

La première terminaison de la résistance R11 est reliée à une première terminaison d'une résistance R12. Une seconde terminaison de la résistance R12 est reliée à une première terminaison d'un condensateur C5.

Une seconde terminaison du condensateur C5 est reliée à la masse du dispositif de détection du passage d'un individu 10.

La résistance R12 et le condensateur C5 forme un filtre passe bas dont la fréquence de coupure du filtre passe bas est par exemple égale à 2,3 MHz.

La **Fig. 4** représente un algorithme de détection du passage d'un individu selon la présente invention.

Le présent algorithme est décrit dans un exemple dans lequel il est exécuté par le processeur 200.

A l'étape E400, le processeur 200 vérifie si un passage d'un individu a été détecté par le détecteur infrarouge en interrogeant la sortie de l'interface 205.

Si un passage d'un individu a été détecté par le détecteur infrarouge, le processeur 200 passe à l'étape E401. Dans la négative, le processeur 200 retourne à l'étape E400.

A l'étape E401, le processeur 200 commande la mise sous tension de l'interface 206 associée au radar hyperfréquence.

A l'étape suivante E402, le processeur 200 active une première temporisation. La première temporisation a par exemple une durée comprise entre 100 millisecondes et 1 seconde. Durant la première temporisation, l'interface 206 et le radar hyperfréquence sont alimentés en énergie électrique.

A l'étape suivante E403, le processeur 200 commande la fermeture des interrupteurs SW1, SW2 et SW3.

A l'étape suivante E404, le processeur 200 entre dans une boucle d'attente. La boucle d'attente est par exemple comprise entre 1 et 200 millisecondes. La boucle d'attente correspond à une première durée prédéterminée de vingt millisecondes.

A l'étape suivante E405, le processeur 200 commande l'ouverture des interrupteurs SW1, SW2 et SW3.

Les étapes E403 à E405 constituent le mode de mise sous tension accélérée de l'interface 206.

A l'étape suivante E406, le processeur 200 entre dans une boucle d'attente pendant un délai compris par exemple entre 1 milliseconde et 200 millisecondes. Par exemple, le délai est égal à 60 millisecondes.

A l'étape suivante E407, le processeur 200 commande la mémorisation du signal de sortie OUT de l'interface 206.

A l'étape suivante E408, le processeur 200 vérifie si la sortie de l'interface 206 a été au niveau haut pendant une seconde durée prédéterminée comprise entre 1 milliseconde et 200 millisecondes. Par exemple, le processeur 200 vérifie si la sortie de l'interface 206 a été au niveau haut pendant une seconde durée prédéterminée au moins égale à une durée par exemple de l'ordre de quatre-vingts millisecondes.

Un niveau haut correspond à une détection de mouvement par le radar.

Si la sortie de l'interface 206 a été au niveau haut au moins pendant la seconde durée prédéterminée, le processeur 200 passe à l'étape E410.

Dans la négative, le processeur 200 passe à l'étape E409.

A l'étape E409 le processeur 200 vérifie si la première temporisation activée à l'étape E402 est écoulée.

Si la première temporisation activée à l'étape E402 est écoulée, le processeur 200 passe à l'étape E412.

Dans la négative, le processeur 200 retourne à l'étape E407 pour procéder à une nouvelle mémorisation du signal de sortie OUT de l'interface 206.

A l'étape E410, le processeur 200 commande la génération d'un message, par exemple à une centrale d'alarme, représentatif de la détection du passage d'un individu. Le message est par exemple transféré par l'intermédiaire d'une liaison sans fil non représentée en Fig. 2.

Le processeur 200 passe ensuite à l'étape E412.

A l'étape E412, le processeur 200 commande l'interruption de la fourniture en énergie électrique de l'interface 206 du radar hyperfréquence.

Bien entendu, la présente invention n'est nullement limitée aux modes de réalisation décrits ici, mais englobe, bien au contraire, toute variante à la portée de l'homme du métier.

## Revendications

1. Procédé de détection du passage d'un individu comportant un détecteur infrarouge, un radar relié à une interface hyperfréquence, l'interface hyperfréquence comportant au moins un filtre passe haut, le au moins un filtre passe haut ayant une constante de temps pour filtrer un signal délivré par le radar, **caractérisé en ce que** le procédé comporte les étapes de :
- activation (E400, E401) d'une alimentation électrique de l'interface hyperfréquence lorsque le passage d'un individu est détecté par le détecteur infrarouge,
- réduction (E403, E404) de la constante de temps du au moins un filtre pendant une première durée prédéterminée,
- modification (E405) de la constante de temps réduite pour obtenir la constante de temps pour filtrer le signal délivré par le radar quand la première durée prédéterminée est écoulée,
- confirmation (E410) du passage d'un individu par l'interface hyperfréquence,
- désactivation (E412) de l'alimentation électrique de l'interface hyperfréquence après la confirmation de détection du passage d'un individu par l'interface hyperfréquence et/ou après la fin d'une temporisation activée lors de l'activation de l'alimentation électrique de l'interface hyperfréquence.

2. Dispositif de détection du passage d'un individu comportant un détecteur infrarouge, un radar relié à une interface hyperfréquence, l'interface hyperfréquence comportant au moins un filtre passe haut, le au moins un filtre passe haut ayant une constante de temps pour filtrer un signal délivré par le radar, **caractérisé en ce que** le dispositif comporte :
- des moyens d'activation (E400) d'une alimentation électrique de l'interface hyperfréquence lorsque le passage d'un individu est détecté par le détecteur infrarouge,
- des moyens de réduction de la constante de temps du au moins un filtre pendant une première durée prédéterminée,
- des moyens de modification de la constante de temps réduite pour obtenir la constante de temps pour filtrer le signal délivré par le radar quand la première durée prédéterminée est écoulée,
- des moyens de confirmation du passage d'un individu par l'interface hyperfréquence,
- des moyens de désactivation de l'alimentation électrique de l'interface hyperfréquence après la confirmation de détection du passage d'un individu par l'interface hyperfréquence et/ou après la fin d'une temporisation activée lors de l'activation de l'alimentation électrique de l'interface hyperfréquence.

3. Dispositif de détection du passage d'un individu selon la revendication 2, **caractérisé en ce que** les moyens de réduction de la constante de temps du au moins un filtre pendant la première durée prédéterminée se composent d'un interrupteur et d'une première résistance, la résistance étant mise en parallèle lorsque l'interrupteur est fermé avec une seconde résistance du filtre passe haut

4. Dispositif de détection du passage d'un individu selon la revendication 2 ou 3, **caractérisé en ce que** les moyens de confirmation du passage d'un individu par l'interface hyperfréquence se composent :
- de moyens de vérification, après un délai prédéterminé, si le signal délivré par l'interface hyperfréquence est supérieur à un seuil prédéterminé pendant une seconde durée prédéterminée,
- de moyens de décision de la confirmation du passage d'un individu si le signal délivré par l'interface hyperfréquence est supérieur au seuil prédéterminé pendant la seconde durée prédéterminée.

5. Dispositif de détection du passage d'un individu selon l'une quelconque des revendications 2 à 4, **caractérisé en ce que** l'interface hyperfréquence comporte trois filtres passe haut et **en ce que** la constante de temps de chaque filtre passe haut est réduite pendant la première durée prédéterminée.

6. Dispositif de détection du passage d'un individu selon l'une quelconque des revendications 4 ou 5, quand la revendication 5 dépend de la revendication 4, **caractérisé en ce que** la première durée prédéterminée est comprise entre 1 milliseconde et 200 millisecondes, la temporisation activée lors de l'activation de l'alimentation électrique de l'interface hyperfréquence est comprise entre 100 millisecondes et 1 seconde, le délai prédéterminé est compris entre 1 milliseconde et 200 millisecondes et la seconde durée prédéterminée est comprise entre 1 milliseconde et 200 millisecondes.

7. Dispositif de détection du passage d'un individu selon la revendication 6, **caractérisé en ce que** la première durée prédéterminée est égale à 20 millisecondes, la temporisation activée lors de l'activation de l'alimentation électrique de l'interface hyperfréquence est égale à une seconde, le délai prédéterminé est égal à 60 millisecondes et la seconde durée prédéterminée est égale à 80 millisecondes.

8. Dispositif de détection du passage d'un individu selon l'une quelconque des revendications 2 à 7, **caractérisé en ce que** le dispositif de détection du passage d'un individu comporte en outre des moyens de génération et de transfert d'un message à une centrale d'alarme, le message étant représentatif de la détection et de la confirmation du passage d'un individu.

9. Dispositif de détection du passage d'un individu selon l'une quelconque des revendications 2 à 8, **caractérisé en ce que** le dispositif de détection du passage d'un individu est un détecteur rideau.

## Patentansprüche

1. Verfahren zur Detektion des Durchtritts eines Individuums aufweisend einen Infrarotdetektor, ein Radar, das mit einer Höchstfrequenzschnittstelle verbunden ist, die Höchstfrequenzschnittstelle aufweisend mindestens einen Hochpassfilter, der mindestens eine Hochpassfilter aufweisend eine Zeitkonstante, um ein Signal zu filtern, das vom Radar geliefert wird, **dadurch gekennzeichnet, dass** das Verfahren die folgenden Schritte aufweist:
- Aktivieren (E400, E401) einer Stromversorgung der Höchstfrequenzschnittstelle, wenn der Durchtritt eines Individuums vom Infrarotdetektor detektiert wird,
- Verringern (E403, E404) der Zeitkonstante des mindestens einen Filters während einer ersten vorbestimmten Dauer,
- Ändern (E405) der verringerten Zeitkonstante, um die Zeitkonstante zu erhalten, um das Signal zu filtern, das vom Radar geliefert wird, wenn die erste vorbestimmte Dauer verstrichen ist,
- Bestätigen (E410) des Durchtritts eines Individuums von der Höchstfrequenzschnittstelle,
- Deaktivieren (E412) der Stromversorgung der Höchstfrequenzschnittstelle nach der Bestätigung der Erkennung des Durchtritts eines Individuums von der Höchstfrequenzschnittstelle und/oder nach dem Ende einer Verzögerung, die beim Aktivieren der Stromversorgung der Höchstfrequenzschnittstelle aktiviert wird.

2. Vorrichtung zur Detektion des Durchtritts eines Individuums aufweisend einen Infrarotdetektor, ein Radar, das mit einer Höchstfrequenzschnittstelle verbunden ist, die Höchstfrequenzschnittstelle aufweisend mindestens einen Hochpassfilter, der mindestens eine Hochpassfilter aufweisend eine Zeitkonstante, um ein Signal zu filtern, das vom Radar geliefert wird, **dadurch gekennzeichnet, dass** die Vorrichtung Folgendes aufweist:
- Mittel zum Aktivieren (E400) einer Stromversorgung der Höchstfrequenzschnittstelle, wenn der Durchtritt eines Individuums vom Infrarotdetektor detektiert wird,
- Mittel zum Verringern der Zeitkonstante des mindestens einen Filters während einer ersten vorbestimmten Dauer,
- Mittel zum Ändern der verringerten Zeitkonstante, um die Zeitkonstante zu erhalten, um das Signal zu filtern, das vom Radar geliefert wird, wenn die erste vorbestimmte Dauer verstrichen ist,
- Mittel zum Bestätigen des Durchtritts eines Individuums von der Höchstfrequenzschnittstelle,
- Mittel zum Deaktivieren der Stromversorgung der Höchstfrequenzschnittstelle nach der Bestätigung der Erkennung des Durchtritts eines Individuums von der Höchstfrequenzschnittstelle und/oder nach dem Ende einer Verzögerung, die beim Aktivieren der Stromversorgung der Höchstfrequenzschnittstelle aktiviert wird.

3. Vorrichtung zur Detektion des Durchtritts eines Individuums nach Anspruch 2, **dadurch gekennzeichnet, dass** sich die Mittel zum Verringern der Zeitkonstante des mindestens einen Filters während der ersten vorbestimmten Dauer aus einem Schalter und einem ersten Widerstand zusammensetzen, wobei der Widerstand mit einem zweiten Widerstand des Hochpassfilters parallel geschaltet ist, wenn der Schalter geschlossen ist

4. Vorrichtung zur Detektion des Durchtritts eines Individuums nach Anspruch 2 oder 3, **dadurch gekennzeichnet, dass** sich die Mittel zum Bestätigen des Durchtritts eines Individuums von der Höchstfrequenzschnittstelle aus Folgendem zusammensetzen:
- Mitteln zum Überprüfen, nach einer vorbestimmten Zeitspanne, ob das Signal, das von der Höchstfrequenzschnittstelle geliefert wird, während einer zweiten vorbestimmten Dauer größer als ein vorbestimmter Schwellenwert ist,
- Mittel zum Entscheiden über die Bestätigung des Durchtritts eines Individuums, wenn das Signal, das von der Höchstfrequenzschnittstelle geliefert wird, während der zweiten vorbestimmten Dauer größer als der vorbestimmte Schwellenwert ist.

5. Vorrichtung zur Detektion des Durchtritts eines Individuums nach einem der Ansprüche 2 bis 4, **dadurch gekennzeichnet, dass** die Höchstfrequenzschnittstelle drei Hochpassfilter aufweist, und dadurch, dass die Zeitkonstante jedes Hochpassfilters während der ersten vorbestimmten Dauer verringert ist.

6. Vorrichtung zur Detektion des Durchtritts eines Individuums nach einem der Ansprüche 4 oder 5, wenn Anspruch 5 von Ansprüche 4 abhängig ist, **dadurch gekennzeichnet, dass** die erste vorbestimmte Dauer zwischen 1 Millisekunde und 200 Millisekunden beträgt, die Verzögerung, die beim Aktivieren der Stromversorgung der Höchstfrequenzschnittstelle aktiviert wird, zwischen 100 Millisekunden und 1 Sekunde beträgt, die vorbestimmte Zeitspanne zwischen 1 Millisekunde und 200 Millisekunden beträgt und die zweite vorbestimmte Dauer zwischen 1 Millisekunde und 200 Millisekunden beträgt.

7. Vorrichtung zur Detektion des Durchtritts eines Individuums nach Anspruch 6, **dadurch gekennzeichnet, dass** die erste vorbestimmte Dauer gleich 20 Millisekunden ist, die Verzögerung, die beim Aktivieren der Stromversorgung der Höchstfrequenzschnittstelle aktiviert wird, gleich einer Sekunde ist, die vorbestimmte Zeitspanne gleich 60 Millisekunden ist und die zweite vorbestimmte Dauer gleich 80 Millisekunden ist.

8. Vorrichtung zur Detektion des Durchtritts eines Individuums nach einem der Ansprüche 2 bis 7, **dadurch gekennzeichnet, dass** die Vorrichtung zur Detektion des Durchtritts eines Individuums ferner Mittel zum Erzeugen und Übermitteln einer Nachricht an eine Alarmzentrale aufweist, wobei die Nachricht für die Erkennung und Bestätigung des Durchtritts eines Individuums repräsentativ ist.

9. Vorrichtung zur Detektion des Durchtritts eines Individuums nach einem der Ansprüche 2 bis 8, **dadurch gekennzeichnet, dass** die Vorrichtung zur Detektion des Durchtritts eines Individuums ein Vorhang-Detektor ist.

## Claims

1. Method for detecting the passage of an individual, employing an infrared detector, and a radar connected to a microwave interface, the microwave interface comprising at least one high-pass filter, the at least one high-pass filter having a time constant for filtering a signal delivered by the radar, **characterized in that** the method comprises the steps of:
- activating (E400, E401) an electrical power supply of the microwave interface when the passage of an individual is detected by the infrared detector,
- decreasing (E403, E404) the time constant of the at least one filter during a first preset duration,
- modifying (E405) the decreased time constant to obtain the time constant for filtering the signal delivered by the radar when the first preset duration has passed,
- obtaining confirmation (E410) of the passage of an individual by the microwave interface,
- deactivating (E412) the electrical power supply of the microwave interface after the confirmation of detection of the passage of an individual by the microwave interface and/or after the end of a delay activated on activation of the electrical power supply of the microwave frequency.

2. Device for detecting the passage of an individual, comprising an infrared detector, and a radar connected to a microwave interface, the microwave interface comprising at least one high-pass filter, the at least one high-pass filter having a time constant for filtering a signal delivered by the radar, **characterized in that** the device comprises:
- means for activating (E400) an electrical power supply of the microwave interface when the passage of an individual is detected by the infrared detector,
- means for decreasing the time constant of the at least one filter during a first preset duration,
- means for modifying the decreased time constant to obtain the time constant for filtering the signal delivered by the radar when the first preset duration has passed,
- means for obtaining confirmation of the passage of an individual by the microwave interface,
- means for deactivating the electrical power supply of the microwave interface after the confirmation of detection of the passage of an individual by the microwave interface and/or after the end of a delay activated on activation of the electrical power supply of the microwave frequency.

3. Device for detecting the passage of an individual according to Claim 2, **characterized in that** the means for decreasing the time constant of the at least one filter during the first preset duration are composed of a switch and of a first resistor, the resistor being connected in parallel, when the switch is closed, with a second resistor of the high-pass filter.

4. Device for detecting the passage of an individual according to Claim 2 or 3, **characterized in that** the means for obtaining confirmation of the passage of an individual by the microwave interface are composed:
- of means for checking, after a preset time lag, whether the signal delivered by the microwave interface remains higher than a preset threshold during a second preset duration,
- of means for deciding to confirm the passage of an individual if the signal delivered by the microwave interface remains higher than the preset threshold during the second preset duration.

5. Device for detecting the passage of an individual according to any one of Claims 2 to 4, **characterized in that** the microwave interface comprises three high-pass filters and **in that** the time constant of each high-pass filter is decreased during the first preset duration.

6. Device for detecting the passage of an individual according to Claim 4 or to Claim 5, when Claim 5 is dependent on Claim 4, **characterized in that** the first preset duration is comprised between 1 millisecond and 200 milliseconds, the delay activated on activation of the electrical power supply of the microwave interface is comprised between 100 milliseconds and 1 second, the preset time lag is comprised between 1 millisecond and 200 milliseconds and the second preset duration is comprised between 1 millisecond and 200 milliseconds.

7. Device for detecting the passage of an individual according to Claim 6, **characterized in that** the first preset duration is equal to 20 milliseconds, the delay activated on activation of the electrical power supply of the microwave interface is equal to one second, the preset time lag is equal to 60 milliseconds and the second preset duration is equal to 80 milliseconds.

8. Device for detecting the passage of an individual according to any one of Claims 2 to 7, **characterized in that** the device for detecting the passage of an individual furthermore comprises means for generating and for transferring a message to an alarm unit, the message being representative of the detection and of the confirmation of the passage of an individual.

9. Device for detecting the passage of an individual according to any one of Claims 2 to 8, **characterized in that** the device for detecting the passage of an individual is a curtain detector.
